# EUROPÄISCHE PATENTSCHRIFT

(11) **EP 1 056 965 B1**
(45) Veröffentlichungstag und Bekanntmachung des Hinweises auf die Patenterteilung: **22.05.2002**
(21) Anmeldenummer: 99913157.6
(22) Anmeldetag: 12.02.1999
(51) Int. Cl.: F16H 61/02

(54) **VERFAHREN ZUR STEUERUNG EINES AUTOMATISCHEN GETRIEBES**
METHOD FOR CONTROLLING AN AUTOMATIC TRANSMISSION
PROCEDE POUR COMMANDER UNE BOITE DE VITESSES AUTOMATIQUE

(30) Priorität: 20.02.1998 DE 19807357
(43) Veröffentlichungstag der Anmeldung: 06.12.2000
(73) Patentinhaber: ZF FRIEDRICHSHAFEN Aktiengesellschaft, 88038 Friedrichshafen (DE)
(72) Erfinder: BURKHART, Hugo, D-88213 Ravensburg (DE); AUMANN, Bernd, D-88279 Amtzell (DE)
(86) Internationale Anmeldenummer: EP9900909
(87) Internationale Veröffentlichungsnummer: WO9942745

(56) Entgegenhaltungen:
- EP-A- 0 268 686
- DE-A- 3 023 278
- US-A- 5 529 546

## Beschreibung

Die vorliegende Erfindung betrifft ein Verfahren zur Steuerung eines automatischen Getriebes, insbesondere eines Lastschaltgetriebes mittels einer elektronischen Getriebesteuerung.

Ein Verfahren nach dem Oberbegriff des Anspruchs 1 ist aus EP 0 547 598 A bekannt.

Ein automatisches Getriebe für Kraftfahrzeuge weist üblicherweise einen hydrodynamischen Wandler, Kupplungen, Bremsen, ein hydraulisches Steuergerät und eine elektronische Getriebesteuerung auf, wobei letztere in Abhängigkeit von bestimmten Eingangsgrössen über das hydraulische Steuergerät die Kupplungen und Bremsen derart ansteuert, dass über eine geeignete Kupplungs-/Brems-Kombination ein entsprechender Gang bzw. eine Übersetzung definiert wird. Als Eingangsgrössen für die elektronische Getriebesteuerung können z. B. die Getriebeeingangsdrehzahl und die Getriebeausgangsdrehzahl verwendet werden, wobei eine Hoch- oder Rückschaltung von einer ersten Übersetzung zu einer zweiten Übersetzung ausgeführt wird, indem eine erste Kupplung oder Bremse öffnet und eine zweite Kupplung oder Bremse schliesst, während die elektronische Getriebesteuerung z. B. mit Beginn der Schaltung zyklisch aus der gemessenen Getriebeausgangsdrehzahl eine erste Kenngrösse in Form eines Produktes aus Getriebeausgangsdrehzahl und erster Übersetzung berechnet und z. B. als zweite Kenngrösse die Getriebeeingangsdrehzahl misst, wie es in der DE 195 36 339 der Anmelderin beschrieben ist.

Bei den meisten herkömmlichen automatischen Getrieben kann der Fahrer aus mehreren Automatikfahrbereichen und definierten Festgängen auswählen (z. B. den Gängen 1-3, 2-5, 3-6), um zu gewährleisten, dass der Fahrbetrieb jeweils an die Geländeform angepasst werden kann.

Dabei sollten für Strassenfahrt tunlichst die oberen Gänge zur Verfügung stehen, wobei in den meisten Fällen zum Anfahren die unteren Gänge nicht benötigt werden. Bei Geländefahrt hingegen sollten tunlichst die unteren Gänge zur Verfügung stehen, jedoch sollte bei Bergabfahrt Hochschaltungen in die oberen Gänge verhindert werden.

Aufgabe der vorliegenden Erfindung ist es, ein Verfahren zur Steuerung eines automatischen Getriebes anzugeben, mit dem die jeweils optimalen Gangbereiche bereitgestellt werden und das bei Schubbetrieb Hochschaltungen unterdrückt.

Die Lösung dieser Aufgabe erfolgt mit den im Patentanspruch angegebenen Verfahrensschritten.

Im folgenden wird der Funktionsablauf des erfindungsgemässen Verfahrens näher erläutert.

Beim Systemstart und bei einer Verweildauer in der Neutralposition während eines Zeitraums t>t1, mit t1 = 1 sec, jedoch nicht beim Reversieren, aktiviert die elektronische Getriebesteuerung generell den Automatikmodus.

Wählt nun der Fahrer die Vorwärtsfahrtrichtung V vor, so sorgt die elektronische Getriebesteuerung dafür, dass das automatische Getriebe in den aktuellen Anfahrgang in Vorwärtsfahrtrichtung V geschaltet wird.

Vorwärts vorwählen heisst dabei, dass der Fahrer einen Multifunktionsknopf am Fahrschalter betätigt und den Fahrschalter mit gedrücktem Knopf von der Stellung N in die Stellung V verschiebt.

Wählt der Fahrer die Rückwärtsfahrtrichtung R vor, so sorgt die elektronische Getriebesteuerung dafür, dass das automatische Getriebe in den geschwindigkeitsangepassten Rückwärtsgang innerhalb des Automatikfahrbereiches geschaltet wird, wobei standardmässig der erste bis dritte Rückwärtsgang eingelegt wird (bei Fahrzeugstillstand üblicherweise der erste Rückwärtsgang).

Rückwärts vorwählen heisst dabei, dass der Fahrer den Multifunktionsknopf am Fahrschalter drückt und den Fahrschalter mit gedrücktem Knopf von der Stellung N in die Stellung R verschiebt.

In der Neutralposition des Fahrschalters kann der Fahrer ausserdem den Anfahrgang durch eine seitliche Bewegung des Fahrschalters nach rechts (+) oder nach links (-) verändern und dadurch um einen Gang hoch- bzw. zurückschalten, so dass anstatt des als zweiten Gang festgelegten Standardanfahrganges der erste oder der dritte Gang zum Anfahren benutzt werden kann. Der Anfahrgang wird dabei auf einem Display dem Fahrer angezeigt.

Nachdem der Fahrer eine Fahrtrichtung ausgewählt und eingelegt hat, wählt das automatische Getriebe mit Hilfe der elektronischen Getriebesteuerung in Abhängigkeit von Fahrgeschwindigkeit und Last den optimalen Gang innerhalb des Automatikfahrbereichs bis der Fahrer die Fahrbereichsvorwahl manuell verändert.

Die Fahrbereichsvorwahl kann verändert werden durch:
a) seitliche Bewegung des Fahrschalters nach links (-), wodurch das automatische Getriebe um einen Gang zurückschaltet und den Automatikbetrieb beendet, d. h. dass der aktuell eingelegte Gang so lange gehalten wird, bis der Fahrer weitere manuelle Schaltungen ausführt oder durch Drücken des Multifunktionsknopfes am Fahrschalter das automatische Getriebe wieder in den Automatikmodus überführt;
b) seitliche Bewegung des Fahrschalters nach rechts (+), wonach das automatische Getriebe um einen Gang hochschaltet und ebenfalls den Automatikbetrieb beendet, so dass der aktuell eingelegte höhere Gang so lange gehalten wird bis der Fahrer weitere manuelle Schaltungen ausführt oder erneut den Multifunktionsknopf am Fahrschalter drückt, um das automatische Getriebe wieder in den Automatikmodus zu überführen;
c) Drücken des Multifunktionsknopfes, so dass das automatische Getriebe den Automatikmodus beendet, ohne eine Schaltung auszuführen; der eingelegte Gang bleibt so lange gehalten, bis der Fahrer eine manuelle Schaltung ausführt oder durch Drücken des Multifunktionsknopfes wieder in den Automatikbetrieb wechselt.

Generell lässt sich sagen, dass bei Eingreifen des Fahrers in den Automatikmodus das automatische Getriebe in den manuellen Modus überwechselt und darin verbleibt bis der Fahrer den Automatikmodus reaktiviert oder den Fahrschalter in die Neutralposition überführt.

Durch die Einführung der Anfahrgangfunktion kann der gesamte Automatikbereich freigegeben werden. Beim Gangeinlegen fährt das Fahrzeug in dem vom automatischen Getriebe eingelegten Anfahrgang los, wonach dem Fahrer der gesamte Automatikfahrbereich zur Verfügung steht ohne weiteres manuelles Einwirken. Dies bedeutet für den Fahrer, dass dieser nur die Fahrtrichtung einlegen muss und dass das automatische Getriebe in den Anfahrgang schaltet (der standardmässig der zweite oder dritte Gang je nach Applikation ist); falls die aktuelle Fahrsituation dies verlangt, wird das automatische Getriebe automatisch zurückgeschaltet, um jederzeit ein optimales Anfahren zu gewährleisten. Nach erfolgreichem Anfahren schaltet das Getriebe automatisch in Abhängigkeit von Fahrzeuggeschwindigkeit und Last den optimalen aller Gänge, den das automatische Getriebe zur Verfügung stellt.

Eine z. B. am Drehmomentwandler vorgesehene Lasterkennung erzeugt ein Signal, das der elektronischen Getriebesteuerung zugeführt wird und das dafür sorgt, dass beim Schubbetrieb Hochschaltungen unterdrückt werden, d. h. dass bei Berbabfahrt oder auch bei Geländefahrt ungewollte Hochschaltungen verhindert werden, so dass eine manuelle Beschränkung des Automatikbereichs bei diesen Fahrsituationen nicht erforderlich ist.

Das erfindungsgemässe Verfahren gewährleistet, dass die Bedienung des Fahrers sich auf die Vorwahl der Fahrtrichtung beschränkt und dass das automatische Getriebe mit der elektronischen Getriebesteuerung es dem Fahrer jederzeit in einfachster Weise ermöglicht, manuell in die Gangwahl einzugreifen, sofern er dies wünscht oder für notwendig erachtet. Danach erfolgen keine automatischen Schaltungen mehr im Getriebe bis die Automatikfunktion per Knopfdruck wieder aktiviert wird oder bis der Fahrschalter wieder aus der Neutralposition in Richtung Vorwärtsfahrt oder Rückwärtsfahrt verschoben wird.

## Patentansprüche

1. Verfahren zur Steuerung eines automatischen Getriebes, vorzugsweise eines Lastschaltgetriebes, mittels eines Fahrschalte und einer elektronischen Getriebesteuerung, wobei bei Vorwahl der Vorwärtsfahrtrichtung ein Anfahrgang in Fahrtrichtung Vorwärts geschaltet wird, wonach ein einem Automatikmodus die elektronische Getriebesteuerung den optimalen Gang innerhalb des Automatikfahrbereichs in Abhängigkeit von Fahrgeschwindigkeit und Last wählt und schaltet, und bei Vorwahl der Rückwärtsfahrtrichtung ein Anfahrgang in Fahrtrichtung Rückwärts geschaltet wird, wonach in einem Automatikmodus die elektronische Getriebesteuerung den geschwindigkeitsangepaßten Gang innerhalb des Automatikfahrbereiches wählt und schaltet. Eine manuelle Veränderung der Fahrbereichsvorwahl durch den Fahrer kann durch seitliche Bewegung des Fahrschalters nach links oder rechts erfolgen, wobei das automatische Getriebe um einen Gang zurückgeschaltet bzw. hochgeschaltet wird und den so erreichten Gang so lange hält, bis der Fahrer weitere manuelle Schaltungen ausführt oder per Knopfdruck das automatische Getriebe wieder in den Automatikmodus überführt, wobei eine Vorwahl eines Ganges in eine Vorwärtsfahrtrichtung, eine Vorwahl eines Ganges in eine Rückwärtsfahrtsrichtung, eine manuelle Veränderung der Fahrbereichsvorwahl und eine Umschaltung in einen Manuell- oder Automatikmodus durch den Fahrschalter erfolgt, **dadurch gekennzeichnet, daß** beim Systemstart und beim Verweilen des Fahrschalters in einer Neutralposition während eines vorgegebenen Zeitraums t' > t1, vorzugsweise mit t1 = 1 sec, die elektronische Getriebesteuerung den Automatikmodus aktiviert, welcher bei Vorwärtsfahrt den optimalen Gang in Abhängigkeit von Fahrgeschwindigkeit und Last wählt, bei Vorwahl der Rückwärtsfahrtrichtung einen geschwindigkeitsangepaßten Gang in Fahrtrichtung Rückwärts wählt und schaltet und beim Reversieren der Automatikmodus nicht aktiviert wird; eine am Getriebe vorgesehene Lasterkennung sorgt dafür, dass im Schubbetrieb unerwünschte Hochschaltungen verhindert werden.

## Claims

1. Method of controlling an automatic transmission, preferably a power shift transmission, by means of a range selector and an electronic transmission control unit, wherein upon preselection of the forward travel direction a starting gear in forward travel direction is selected, after which a an automatic mode the electronic transmission control unit in dependence upon driving speed and load selects and engages the optimum gear within the automatic driving range, and upon preselection of the backward travel direction a starting gear in backward travel direction is selected, after which in an automatic mode the electronic transmission control unit selects and engages the speed-adapted gear within the automatic driving range. A manual change of the driving range preselection by the driver may be effected by lateral movement of the range selector to the left or to the right, wherein the automatic transmission is shifted down or up a gear respectively and maintains the gear thus reached until the driver effects further manual shift operations or by pressing the button switches the automatic transmission back into the automatic mode, wherein a preselection of a gear in a forward travel direction, a preselection of a gear in a backward travel direction, a manual change of the driving range preselection and a switchover into a manual or automatic mode is effected by the range selector, **characterized in that** given the system start and given a dwell of the range selector in a neutral position for a defined period t'>t1, preferably with t1 = 1 sec, the electronic transmission control unit activates the automatic mode, which in the case of forward travel selects the optimum gear in dependence upon driving speed and load, in the case of preselection of backwards travel direction selects and engages a speed-adapted gear in backwards travel direction and in the case of reversing the automatic mode is not activated; a load detection device provided on the transmission ensures that unwanted upshifts are prevented during coasting.

## Revendications

1. Méthode de commande d'une boîte de vitesses automatique, de préférence d'une boîte de vitesses couplable sous charge, au moyen d'un sélecteur de marche et d'un boîtier de commande électronique de la boîte de vitesses, sachant qu'en cas de présélection du sens de marche avant un rapport de démarrage en sens de marche avant est enclenché, ayant comme conséquence qu'en mode automatique le boîtier de commande électronique de la boîte de vitesses sélectionne et engage le rapport optimal de la plage de vitesses automatique en fonction de la vitesse de déplacement et de la charge du véhicule, et sachant qu'en cas de présélection du sens de marche arrière le système engage un rapport de démarrage en marche arrière, ayant comme conséquence qu'en mode automatique le boîtier de commande électronique de la boîte de vitesses sélectionne et engage un rapport approprié à la vitesse de déplacement du véhicule dans la plage de vitesses automatique. Le conducteur peut intervenir manuellement et modifier la plage de vitesses présélectionnée en déplaçant le sélecteur de marche vers gauche ou vers droite, ce qui entraîne le passage à un rapport inférieur ou le passage à un rapport supérieur dans la boîte de vitesses automatique et le maintien du rapport engagé jusqu'à ce que le conducteur effectue d'autres passages manuels ou déclenche, en appuyant sur un bouton, le passage au mode automatique, sachant qu'une présélection d'un rapport dans le sens de marche avant, une présélection d'un rapport dans le sens de marche arrière, une modification manuelle de la plage de vitesses présélectionnée et un passage au modes manuel ou automatique est effectué au moyen du sélecteur de marche, **caractérisée en ce que** lors du démarrage du système, le sélecteur de marche restant pendant un temps prédéfini t > t1 dans une position de point mort, de préférence avec t1 = 1 s, le boîtier de commande électronique de la boîte de vitesses enclenche le mode automatique, dans lequel, en marche avant, est sélectionné le rapport optimal en fonction de la vitesse du véhicule et de la charge, en cas de présélection du sens de marche arrière est sélectionné et engagé un rapport approprié à la vitesse de déplacement en marche arrière et en cas d'inversion du sens de marche le mode automatique n'est pas activé. Un dispositif de reconnaissance de la charge intégré à la boîte de vitesses permet d'inhiber des passages montants indésirables lors du roulement en poussée.
